# EUROPEAN PATENT SPECIFICATION

(11) **EP 2 339 263 B1**
(45) Date of publication and mention of the grant of the patent: **27.02.2013**
(21) Application number: 09180357.7
(22) Date of filing: 22.12.2009
(51) Int. Cl.: F24J 3/08

(54) **Ground heat exchanger**
Erdwärmetauscher
Échangeur de chaleur au sol

(43) Date of publication of application: 29.06.2011
(73) Proprietor: Uponor Innovation AB, 73061 Virsbo (SE)
(72) Inventor: Ljungqvist John, 73531 Surahammar (SE); Larsson, Thomas, 736 91 Kungsör (SE); Prem, Klaus, 73534 Surahammar (SE)
(74) Representative: Rantanen, Reijo Kalervo

(56) References cited:
- WO-A1-96/14544
- DE-U1-202008 002 893
- JP-A- 2009 068 749
- US-A- 5 477 914

## Description

### FIELD OF THE INVENTION

The invention relates to a ground heat exchanger that is intended to be positioned in a borehole in the ground, the ground heat exchanger comprising a flow leg, a heat exchanger leg, an upper manifold and a lower manifold to be positioned at the bottom of the borehole, the flow leg extending from the upper part of the borehole to the lower manifold, the heat exchanger leg comprising an outlet pipe extending upwards from the upper manifold and a plurality of heat exchanger pipes between the upper manifold and the lower manifold, the lower manifold connecting the flow leg and the heat exchanger leg, and the upper manifold comprising a body forming a fluid space, a connection from the fluid space to the outlet pipe and a plurality of connections from the fluid space to the heat exchanger pipes, wherein the flow leg is arranged to go through the fluid space of the upper manifold.

### BACKGROUND OF THE INVENTION

Ground heat exchangers are used as heat transfer units in heating or cooling systems utilizing the ground as a heat source or as heat storage. In the heating systems the ground heat exchangers are used to collect heat present in the ground and to convey or carry it for warming the building, for example. In the cooling systems the ground heat exchangers are used to convey or carry extra heat present in the building and to transfer it to the ground.

One of the above type of ground heat exchangers is presented in US publication 5,477,914, which presents three ground heat exchange units connected to a heat pump located in a structure for adjusting the temperature of a selected fluid. The ground heat exchange units comprise, inter alia, a first primary conduit or a flow leg, an upper end cap which serves as an upper manifold and a lower end cap which serves as a lower manifold. The first primary conduit extends from the upper part of the surrounding earth to the lower manifold. The upper end cap comprises a body forming a fluid space for the heat transfer fluid, and the first primary conduit is arranged to go through the fluid space of the upper end cap.

The ground heat exchange unit presented in US publication 5,477,914 is, as such, quite feasible to be used as an underground heat exchange unit but some difficulties relating to assembling the first primary conduit through the upper end cap and the sealing between the first primary conduit and the upper end cap may be encountered during the installation of the ground heat exchange units.

### BRIEF DESCRIPTION OF THE INVENTION

An object of the present invention is to provide an improved type of ground heat exchanger with respect to the above mentioned problems.

The ground heat exchanger according to the invention is characterized in that the upper manifold comprises a conduit pipe through the fluid space of the body and that the flow leg is positioned inside the conduit pipe.

A ground heat exchanger intended to be positioned in a borehole in the ground comprises a flow leg, a heat exchanger leg, an upper manifold and a lower manifold to be positioned at the bottom of the borehole. The flow leg extends from the upper part of the borehole to the lower manifold. The heat exchanger leg comprises an outlet pipe extending upwards from the upper manifold and a plurality of heat exchanger pipes between the upper manifold and the lower manifold, the lower manifold connecting the flow leg and the heat exchanger leg. The upper manifold comprises a body forming a fluid space, a connection from the fluid space to the outlet pipe and a plurality of connections from the fluid space to the heat exchanger pipes, wherein the flow leg is arranged to go through the fluid space of the upper manifold. Further, the upper manifold comprises a conduit pipe through the fluid space of the body such that the flow leg can be positioned inside the conduit pipe.

The conduit pipe of the upper manifold provides a clear passage for the flow leg through the flow space of the upper manifold such that the end of the flow leg cannot get engaged with the body of the upper manifold during the installation of the flow leg through the upper manifold. Additionally, it is also very easy to provide a sealing of the fluid space between the body of the upper manifold and the conduit pipe, or between the top and bottom lids and the conduit pipe already during the manufacturing phase of the upper manifold. Further, the conduit pipe supports the flow leg going through the upper manifold such that there is no need to fasten the flow leg to the body of the upper manifold.

According to an embodiment of the invention, the distance between the centre axis of the flow leg and the centre axis of the upper manifold is different in the upper part of the manifold than at the lower part of the manifold. With this kind of structure of the upper manifold, the flow leg and the outlet pipe may be located next to each other such that the diameter of the cylindrical upper manifold is as small as possible and, at the same time, the portion of the flow leg going towards the lower manifold may be located to be at least at a specific minimum distance from the heat exchanger pipes, if necessary.

According to a second embodiment in the invention, the flow leg is positioned in the middle of the upper manifold in the lower part of the upper manifold, this providing a symmetrical structure of the upper manifold in the lower part of the upper manifold.

### BRIEF DESCRIPTION OF THE DRAWINGS

In the following, the invention will be described in greater detail by means of preferred embodiments with reference to the attached drawings, in which
Figure 1 shows schematically a side view of a ground heat exchanger partly in cross-section and
Figure 2 shows schematically a side view of an upper manifold in cross-section.

### DETAILED DESCRIPTION OF THE INVENTION

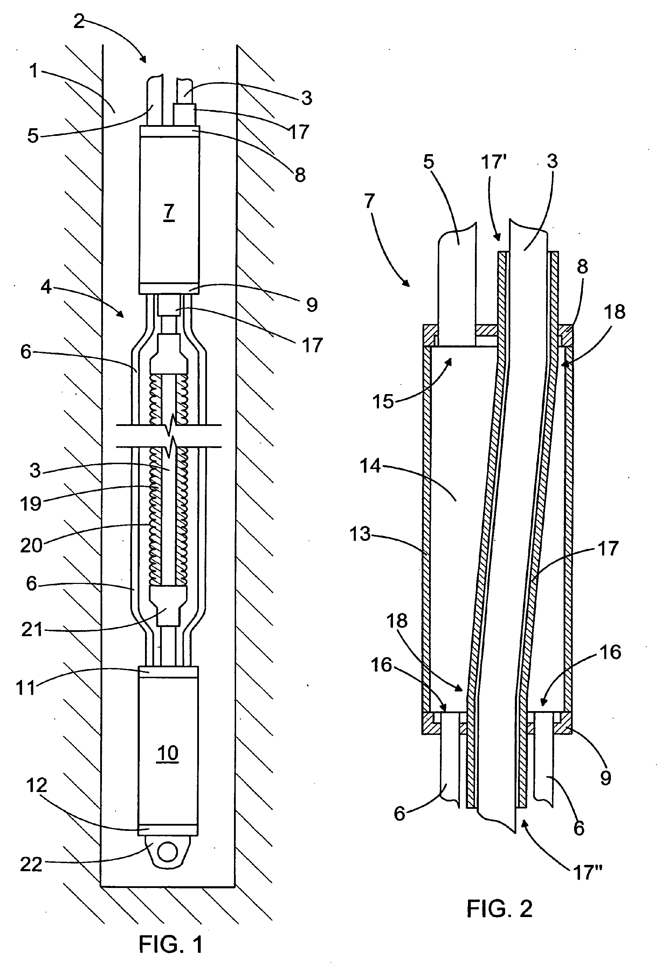

Figure 1 shows partly in cross-section a side view of a ground heat exchanger 2 positioned in a borehole 1. In the following, the ground heat exchanger 2 may also be called an exchanger 2. The exchanger 2 comprises a flow leg 3, a heat exchanger leg 4, an upper manifold 7 and a lower manifold 10. The upper manifold 7 is positioned in the upper part of the borehole 1, and the lower manifold 10 is positioned at the bottom of the borehole 1. The flow leg 3 extends from the upper part of the borehole 1 through the upper manifold 7 to the lower manifold 10. The heat exchanger leg 4 comprises an outlet pipe 5 extending upwards from the upper manifold 7 and a plurality of heat exchanger pipes 6 between the upper manifold 7 and the lower manifold 10. The heat exchanger pipes surround the flow leg 3. The lower manifold 10 connects the flow leg 3 and the heat exchanger leg 4 together by dividing the heat transfer fluid flow in the flow leg 3 into smaller volume flows for the heat exchanger pipes 6. The upper manifold 7 further comprises a top lid 8 and a bottom lid 9, and the lower manifold 10 comprises a top lid 11 and a bottom lid 12.

The basic operation principle of the ground heat exchanger 2 above is as follows. The flow leg 3 forwards the flow of heat transfer fluid from an overground heating system, which may be for example a heat pump, to the ground heat exchanger 2, and especially to the lower manifold 10. The overground heating system is not shown in Figure 1 for the sake of clarity. The heat transfer fluid may be for example water or a mix of water and ethanol with a mixing ratio of 65/35 %, for example. In the lower manifold 10 the flow of the heat transfer fluid flowing in the flow leg 3 is divided into smaller volume flows for the heat exchanger pipes 6. In the heat exchanger pipes 6 the heat transfer fluid flows upwards from the lower manifold 10 towards the upper manifold 7. In the upper manifold 7 the smaller volume flows of the heat transfer fluid are combined into one larger volume flow flowing in the outlet pipe 5 of the heat exchanger leg 4 towards the overground heating system. The flow of the heat transfer fluid may be caused by one or more pumps, for example, which may be integrated inside the heating system or separated from the actual heating system. If the ground heat exchanger 2 is used in connection with an cooling system, the direction of the flow of the heat transfer fluid is opposite to that explained above.

When the heat transfer fluid flows in the heat exchanger pipes 6, it either collects or receives heat from the ground or transfers or delivers heat to the ground. If the overground system is used for heating, the temperature of the heat transfer fluid flowing from the flow leg 3 to the heat exchanger pipes 6 is quite low, whereby the temperature of the heat transfer fluid is lower than the ground temperature and the fluid has an ability to receive heat from the ground. If the overground system is used for cooling, the temperature of the heat transfer fluid flowing to the heat exchanger pipes 6 may be quite high, in any case higher than the ground temperature, whereby the heat transfer fluid delivers heat energy to the ground and cools down.

In Figure 1, there is a distance between the heat exchanger pipes 6 and the wall of the borehole 1 for the sake of clarity of the figure, but in practice the heat exchanger pipes 6 are positioned as close to the wall of the borehole as possible so that the heat transfer between the heat exchanger pipes 6 and the ground is as effective as possible.

Further, Figure 1 shows only two heat exchanger pipes 6 going from the lower manifold 10 to the upper manifold 7 but in practice the ground heat exchanger 2 comprises as many heat exchanger pipes 6 as possible so that the surface area of the wall of the borehole 1 is covered by the heat exchanger pipes 6 as effectively as possible for maximizing the heat transfer ability of the ground heat exchanger 2.

Figure 2 shows schematically a side view of an upper manifold 7 in cross-section. The upper manifold 7 comprises a body 13 forming a fluid space 14. The upper manifold 7 further comprises a connection 15 from the fluid space 14 to the outlet pipe 5 and a plurality of connections 16 from the fluid space 14 to the heat exchanger pipes 6. In the embodiment shown in Figure 2 there are shown only two connections 16. In the fluid space 14 the smaller volume flows of the heat transfer fluid flowing from the heat exchanger pipes 6 into the fluid space are combined into one larger volume flow flowing through the outlet pipe 5 towards the overground heating or cooling system.

The flow leg 3 is arranged to go through the fluid space 14 of the upper manifold 7. For arranging the flow leg 3 to go through the fluid space 14 of the upper manifold 7, the upper manifold 7 comprises a conduit pipe 17 going through the fluid space 14 of the upper manifold 7, and the flow leg 3 is positioned inside the conduit pipe 17.

There are several advantages with providing the upper manifold 7 with a conduit pipe 17. Firstly, the conduit pipe 17 provides a clear passage for the flow leg 3 through the flow space 14 of the upper manifold 7 during the installation of the flow leg 3 through the upper manifold 7 such that the end of the flow leg 3 cannot get engaged with the body of the upper manifold. Secondly, it is very easy to provide a sealing of the fluid space 14 between the body 13 of the upper manifold 7 and the conduit pipe 17, or between the top and bottom lids 8, 9 and the conduit pipe 17 already during the manufacturing phase of the upper manifold 7. In this way the conduit pipe 17 provides a supporting structure for the flow leg 3 going through the upper manifold 7 such that there is no need to fasten the flow leg 3 to the body 13 of the upper manifold 7. Otherwise the sealing of the fluid space 14 between the body or the top and bottom lids of the upper manifold and the flow leg 3 going through the fluid space 14 should be done directly to the flow leg 3 which then will be a fixed part of the upper manifold 7.

The conduit pipe 17 in the embodiment of Figure 2 is dimensioned in such a way that the upper end 17' of the conduit pipe 17 extends above the top lid 8 of the upper manifold 7 and that the lower end 17" of the conduit pipe 17 extends below the bottom lid 9 of the upper manifold 7. This design gives necessary ability to get a good quality weld between the conduit pipe 17 and the top and bottom lids 8, 9.

Concerning the shape of the body 13 of the upper manifold 7, the body 13 of the upper manifold 7 may have different types of shapes. However, if the body 13 of the upper manifold 7 is cylindrical, the installation of the upper manifold 7 in a borehole 1 typically having a cylindrical shape, too, is quite easy. The cylindrical shape of the body 13 of the upper manifold 7 as well as the cylindrical shape of the top lid 8 and the bottom lid 9 provide also structural rigidity for the structure of the upper manifold 7.

The distance between the centre axis of the flow leg 3 and the centre axis of the manifold 7 may be different in the upper part of the manifold 7 than in the lower part of the manifold 7, as shown schematically in Figures 1 and 2. For the sake of clarity, these centre axes are not shown in Figure 1 or 2 but their position is evident for the person skilled in the art. This is provided by the conduit pipe 17 comprising curves 18 in the upper part of the manifold 7 and in the lower part of the manifold 7. With this kind of structure of the upper manifold 7 the flow leg 3 and the outlet pipe 5 may be located next to each other such that the diameter of the cylindrical upper manifold 7 is as small as possible and, at the same time, the portion of the flow leg 3 going towards the lower manifold 10 may be located to be at least at a specific minimum distance from the heat exchanger pipes 6, if necessary.

Minimizing the diameter of the upper manifold 7 and thereby the maximum diameter of the whole ground heat exchanger 2 is important in view of the drilling costs of the borehole 1, too. The larger the diameter of the borehole 1, the higher are typically the costs of drilling. Also, in many countries, building regulations concerning the structure of the borehole 1 determine that the upper part of the borehole 1 should be strengthened by inserting a steel pipe into the borehole 1 to support the wall of the borehole 1 in its upper part. Thereby, by minimizing the diameter of the upper manifold 7 the diameter of the steel pipe and thus the costs due to the steel pipe may be minimized.

In the embodiment of the upper manifold 7 according to Figures 1 and 2, the flow leg 3 is positioned exactly in the middle of the lower part of the upper manifold 7 or at the centre axis of the upper manifold 7. This provides a symmetrical structure of the upper manifold in the lower part of the manifold.

The actual dimension of the upper manifold 7 may vary depending on the actual heating or cooling system to be installed, but according to one design example, if the borehole 1 has a diameter of 140 millimetres and the length or depth of 200 metres, the length of the upper manifold 7 may be for example about 1 metre.

Figure 1 further shows insulation 19 or a layer of insulating material 19 arranged around at least the part of the length of the flow leg 3 between the upper manifold 7 and the lower manifold 10. In Figure 1, for the sake of clarity, the insulation 19 is shown around the flow leg 3 only in a portion of the length of the flow leg 3 between the upper manifold 7 and the lower manifold 10. The insulation 19 prevents the heat transfer between the flow leg 3 and the heat exchanger pipes 6 and thus increases the efficiency of the ground heat exchanger 2. The thermally insulating material surrounding the flow leg 3 may consist of crosslinked Polyethylene (PEX) with a closed cell structure.

The insulation 19 is surrounded by a protective pipe 20, the protective pipe 20 protecting the insulation 10 from the effect of water and corrosive contaminants possibly present in the borehole 1. At the same time, the protective pipe 20 affixes the insulation 19 around the flow leg 3. The protective pipe 20 shown in Figure 2 comprises a corrugated outer surface, which increases stability and strength of the structure of the protective pipe 20. The insulation 19 and the protective pipe 20 are shown in cross-section in Figure 1.

At the upper end and at the lower end of the insulation 19, there are shrink sleeves 21 arranged around the ends of the protective pipe 20. The shrink sleeves 21 prevent water possibly present in the borehole 1 from entering under the insulation 19 around the flow leg 3 through the ends of the protective pipe 20. The shrink sleeves 21 are assembled partly around the ends of the protective pipe 20 and partly around the flow leg 3 such that when the shrink sleeves are heated, they shrink or contract around the flow leg 3 and the ends of the protective pipe 20 such that a watertight joint is produced between the flow leg 3, the insulation 19, the protective pipe 20 and the shrink sleeves 21 is produced.

The ground heat exchanger 2 comprises at the bottom of the lower manifold 10 a gripping means 22, in the form of a hook or the like, for example, for providing an attachment for additional weights to be connected to the ground heat exchanger 2. The purpose of the additional weights is to prevent the ground heat exchanger 2 from lifting or rising upwards for example in a case where there is water at the bottom of the borehole 1, the water tending to lift the lower manifold or the whole ground heat exchanger 2 upwards in the borehole 1.

In some cases the features set forth in this description may be used as such, irrespective of other features. On the other hand, features set forth in this description may be combined, where necessary, to provide various combinations.

It will be obvious to a person skilled in the art that, as the technology advances, the inventive concept can be implemented in various ways. The invention and its embodiments are not limited to the examples described above but may vary within the scope of the claims.

## Claims

1. A ground heat exchanger (2) that is intended to be positioned in a borehole (1) in the ground,
the ground heat exchanger (2) comprising a flow leg (3),
a heat exchanger leg (4),
an upper manifold (7) and
a lower manifold (10) to be positioned at the bottom of the borehole (1),
the flow leg (3) extending from the upper part of the borehole (1) to the lower manifold,
the heat exchanger leg (4) comprising an outlet pipe (5) extending upwards from the upper manifold (7) and a plurality of heat exchanger pipes (6) between the upper manifold (7) and the lower manifold (10),
the lower manifold (10) connecting the flow leg (3) and the heat exchanger leg (4), and
the upper manifold (7) comprising a body (13) forming a fluid space (14), a connection (15) from the fluid space (14) to the outlet pipe (5) and a plurality of connections (16) from the fluid space (14) to the heat exchanger pipes (6),
wherein the flow leg (3) is arranged to go through the fluid space (14) of the upper manifold (7),
**characterized in that** the upper manifold (7) comprises a conduit pipe (17) through the fluid space (14) of the body (13) and that the flow leg (3) is positioned inside the conduit pipe (17).

2. A ground heat exchanger according to claim 1, **characterized in that** the upper manifold (7) is cylindrical.

3. A ground heat exchanger according to claim 1 or 2, **characterized in that** the upper manifold (7) comprises a top lid (8) and a bottom lid (9).

4. A ground heat exchanger according to any one of the preceding claims, **characterized in that** the distance between the centre axis of the flow leg (3) and the centre axis of the upper manifold (7) is different in the upper part of the manifold (7) than in the lower part of the manifold (7).

5. A ground heat exchanger according to claim 4, **characterized in that** at the bottom of the upper manifold (7) the flow leg (3) is positioned in the middle of the upper manifold (7).

6. A ground heat exchanger according to any one of the preceding claims, **characterized in that** the flow leg (3) is surrounded by insulation (19) at least in part of the distance between the upper manifold (7) and the lower manifold (10).

7. A ground heat exchanger according to claim 6, **characterized in that** the ground heat exchanger (2) further comprises a protective pipe (20) around the insulation (19) and shrink sleeves (21) arranged at the ends of the protective pipe (20).

8. A ground heat exchanger according to any one of the preceding claims, **characterized in that** the ground heat exchanger (2) further comprises, at the bottom of the lower manifold (10), gripping means (22) for providing an attachment for additional weights to be connected with the ground heat exchanger (2) in order to prevent the ground heat exchanger (2) from rising upwards in the borehole (1).

## Patentansprüche

1. Ein Erdwärmetauscher (2), der vorgesehen ist, in ein Bohrloch (1) in dem Boden platziert zu werden,
wobei der Erdwärmetauscher (2) Folgendes aufweist
einen Strömungsschenkel (3),
einen Wärmetauscherschenkel (4),
ein oberes Verteilerstück (7) und
ein unteres Verteilerstück (10), das vorgesehen ist, am unteren Ende des Bohrlochs (1) platziert zu werden,
wobei der Strömungsschenkel (3) sich von dem oberen Teil des Bohrlochs (1) bis zu dem unteren Verteilerstück erstreckt,
wobei der Wärmetauscherschenkel (4) ein, sich nach oben aus dem oberen Verteilerstück (7) erstreckendes Abflussrohr (5) und eine Vielzahl von Wärmetauscherrohren (6) zwischen dem oberen Verteilerstück (7) und dem unteren Verteilerstück (10) aufweist,
wobei das untere Verteilerstück (10) den Strömungsschenkel (3) und den Wärmetauscherschenkel (4) verbindet, und
das obere Verteilerstück (7) ein, einen Fluidraum (14) bildendes Gehäuse (13), eine Verbindung (15) von dem Fluidraum (14) zu dem Abflussrohr (5) und eine Vielzahl von Verbindungen (16) von dem Fluidraum (14) zu den Wärmetauscherrohren (6) aufweist,
wobei der Strömungsschenkel (3) angeordnet ist, durch den Fluidraum (14) des oberen Verteilerstückes (7) zu verlaufen,
**dadurch gekennzeichnet, dass** das obere Verteilerstück (7) ein Leitungsrohr (17) durch den Fluidraum (14) des Gehäuses (13) aufweist und dass der Strömungsschenkel (3) innerhalb des Leitungsrohres (17) platziert ist.

2. Ein Erdwärmetauscher gemäß dem Patentanspruch 1, **dadurch gekennzeichnet, dass** das obere Verteilerstück (7) zylindrisch ist.

3. Ein Erdwärmetauscher gemäß dem Patentanspruch 1 oder 2, **dadurch gekennzeichnet, dass** das obere Verteilerstück (7) einen oberen Deckel (8) und einen unteren Deckel (9) aufweist.

4. Ein Erdwärmetauscher gemäß einem der vorhergehenden Patentansprüche, **dadurch gekennzeichnet , dass** die Entfernung zwischen der Mittelachse des Strömungsschenkels (3) und der Mittelachse des oberen Verteilerstücks (7) in dem oberen Teil des Verteilerstücks (7) sich von demjenigen in dem unteren Teil des Verteilerstücks (7) unterscheidet.

5. Ein Erdwärmetauscher gemäß dem Patentanspruch 4, **dadurch gekennzeichnet, dass** am unteren Ende des oberen Verteilerstücks (7) der Strömungsschenkel (3) in der Mitte des oberen Verteilerstücks (7) platziert ist.

6. Ein Erdwärmetauscher gemäß einem der vorhergehenden Patentansprüche, **dadurch gekennzeichnet, dass** der Strömungsschenkel (3) mindestens in einem Teil der Entfernung zwischen dem oberen Verteilerstück (7) und dem unteren Verteilerstück (10) von einer Isolierung (19) umgeben ist.

7. Ein Erdwärmetauscher gemäß dem Patentanspruch 6, **dadurch gekennzeichnet, dass** der Erdwärmetauscher (2) weiterhin ein Schutzrohr (20) um der Isolierung (19) herum und an den Enden des Schutzrohres (20) angeordnete Schrumpfmuffen (21) aufweist.

8. Ein Erdwärmetauscher gemäß einem der vorhergehenden Patentansprüche, **dadurch gekennzeichnet, dass** der Erdwärmetauscher (2) weiterhin am unteren Ende des unteren Verteilerstücks (10) ein Greifmittel (22) aufweist, um eine Befestigung von zusätzlichen Gewichten zur Verfügung zu stellen, die mit dem Erdwärmetauscher (2) verbunden werden können, um zu verhindern, dass der Erdwärmetauscher (2) in dem Bohrloch (1) nach oben steigt.

## Revendications

1. Echangeur de chaleur au sol (2) prévu pour être placé dans un trou de forage (1) réalisé dans le sol,
l'échangeur de chaleur au sol (2) comprenant une conduite de circulation (3),
une conduite échangeuse de chaleur (4),
un collecteur supérieur (7), et
un collecteur inférieur (10) à placer au fond du trou de forage (1),
la conduite de circulation (3) s'étendant de la partie supérieure du trou de forage (1) au collecteur inférieur,
la conduite échangeuse de chaleur (4) comprenant une canalisation de sortie (5) s'étendant vers le haut du collecteur supérieur (7) et une pluralité de canalisations (6) échangeuses de chaleur situées entre le collecteur supérieur (7) et le collecteur inférieur (10),
le collecteur inférieur (10) reliant la conduite de circulation (3) et la conduite échangeuse de chaleur (4), et
le collecteur supérieur (7) comprenant un corps (13) formant une zone de fluide (14), une connexion (15) de la zone de fluide (14) avec la canalisation de sortie (5) et une pluralité de connexions (16) de la zone de fluide (14) avec les canalisations (6) échangeuses de chaleur,
dans lequel la conduite de circulation (3) est agencée pour traverser la zone de fluide (14) du collecteur supérieur (7),
**caractérisé en ce que** le collecteur supérieur (7) comprend un tube conducteur (17) traversant la zone de fluide (14) du corps (13) et **en ce que** la conduite de circulation (3) est disposée à l'intérieur du tube conducteur (17).

2. Echangeur de chaleur au sol selon la revendication 1, **caractérisé en ce que** le collecteur supérieur (7) est cylindrique.

3. Echangeur de chaleur au sol selon la revendication 1 ou 2, **caractérisé en ce que** le collecteur supérieur (7) comprend un couvercle supérieur (8) et un couvercle inférieur (9).

4. Echangeur de chaleur au sol selon l'une quelconque des revendications précédentes, **caractérisé en ce que** la distance qui sépare l'axe central de la conduite de circulation (3) et l'axe central du collecteur supérieur (7) est différente dans la partie supérieure du collecteur (7) de la distance correspondante dans la partie inférieure du collecteur (7).

5. Echangeur de chaleur au sol selon la revendication 4, **caractérisé en ce que** dans la partie basse du collecteur supérieur (7), la conduite de circulation (3) est positionnée au centre du collecteur supérieur (7).

6. Echangeur de chaleur au sol selon l'une quelconque des revendications précédentes, **caractérisé en ce que** la conduite de circulation (3) est entourée par un isolant (19) couvrant au moins en partie la distance qui sépare le collecteur supérieur (7) du collecteur inférieur (10).

7. Echangeur de chaleur au sol selon la revendication 6, **caractérisé en ce que** l'échangeur de chaleur au sol (2) comprend en outre un tube de protection (20) entourant l'isolant (19) et des manchons rétractables (21) agencés aux extrémités de la conduite de protection (20).

8. Echangeur de chaleur au sol selon l'une quelconque des revendications précédentes, **caractérisé en ce que** l'échangeur de chaleur au sol (2) comprend en outre, au niveau du bas du collecteur inférieur (10), un moyen de fixation (22) permettant une fixation de poids supplémentaires à l'échangeur de chaleur au sol (2) pour l'empêcher de remonter dans le trou de forage (1).
